# EUROPÄISCHE PATENTSCHRIFT

(11) **EP 2 257 419 B1**
(45) Veröffentlichungstag und Bekanntmachung des Hinweises auf die Patenterteilung: **01.08.2018**
(21) Anmeldenummer: 09716646.6
(22) Anmeldetag: 04.02.2009
(51) Int. Cl.: B29C 70/48, B29C 70/54, B33Y 80/00, B29K 707/04, B29K 63/00, B29K 101/10, B29L 31/30

(54) **VERFAHREN ZUM TOLERANZAUSGLEICH ZWISCHEN ZWEI FASERVERBUNDBAUTEILEN**
METHOD FOR TOLERANCE COMPENSATION BETWEEN TWO FIBER COMPOSITE COMPONENTS
PROCÉDÉ DE COMPENSATION DE TOLÉRANCES ENTRE DEUX ÉLÉMENTS EN MATÉRIAU COMPOSITE RENFORCÉ PAR FIBRES

(30) Priorität: 29.02.2008 DE 102008012055
(43) Veröffentlichungstag der Anmeldung: 08.12.2010
(73) Patentinhaber: Airbus Operations GmbH, 21129 Hamburg (DE)
(72) Erfinder: JOERN, Paul, 22763 Hamburg (DE)
(74) Vertreter: Bird & Bird LLP
(86) Internationale Anmeldenummer: PCT/EP2009/051229
(87) Internationale Veröffentlichungsnummer: WO 2009/109441

(56) Entgegenhaltungen:
- EP-A- 1 081 043
- EP-A1- 1 473 142
- US-A1- 2002 125 613

## Beschreibung

Die Erfindung betrifft ein Verfahren zum Toleranzausgleich zwischen zwei Faserverbundbauteilen für Luftfahrzeuge.

Konventionelle Rumpfzellen für Flugzeuge werden zurzeit überwiegend mit Aluminiumlegierungen hergestellt. Vor allem um Gewichtseinsparungen zu erzielen, wird der Anteil von Faserverbundbauteilen, insbesondere CFK-Bauteilen an der gesamten Rumpfzellenstruktur und auch anderen Strukturkomponenten stetig erhöht.

Zur Herstellung von Faserverbundbauteilen werden diskrete Fasern bzw. Faserbündel und/oder Faserhalbzeuge zusammengelegt und in eine gewünschte geometrische Form gebracht. Hierbei können Verstärkungsfasern bereits zuvor mit einem Matrixsystem getränkt sein (sogenanntes Prepreg-Material) oder die Fasern werden in einem anschließenden Prozess (Infusionsverfahren bzw. Injektionsverfahren) mit dem matrixbildenden Kunststoffmaterial imprägniert, das heißt die Verstärkungsfasern bevorzugt allseitig in die Kunststoffmatrix eingeschlossen. Beide Prozesse können in geschlossenen Werkzeugen oder in offenen Vorrichtungen durchgeführt werden. Nach dem Aushärten des matrixbildenden Kunststoffmaterials, bei dem es sich um ein duroplastisches oder thermoplastisches Kunststoffmaterial handeln kann, wird das fertige Faserverbundbauteil aus der Form entnommen, gegebenenfalls mechanisch nachbearbeitet und anschließend montiert.

Aufgrund unvermeidbarer Fertigungstoleranzen, wie zum Beispiel Schwankungen der Materialstärke der Faserhalbzeuge, Abweichungen beim Ablege- und Drapierprozess sowie abweichender Prozessparameter in Gestalt von Schrumpfungserscheinungen, variierenden Infusions- bzw. Injektionsdrücken, schwankenden Imprägnierungstemperaturen, nicht konstanten Aushärtungstemperaturen und sich ändernden Autoklavendrücken unterliegt das ausgehärtete Faserverbundbauteil im Gegensatz zu metallischen Bauteilen geometrischen Schwankungen. Das Toleranzintervall, das sich für ein Faserverbundbauteil ergibt, hängt wesentlich vom eingesetzten Fertigungsprozess, dem verwendeten Material sowie der Bauteilgeometrie ab.

So ist beispielsweise für Prepreg-Bauteile, die in einfachen, offenen Vorrichtungen geformt werden, eine Toleranzabweichung der Materialstärke von bis zu ± 10% möglich. Bei einer mit einem Faserverbundmaterial gefertigten Außenhautschale für die Beplankung einer Rumpfzelle resultiert hieraus bei einer angenommenen Hautdicke von zum Beispiel 10 mm im Bereich eines Türausschnittes ein Schwankungsintervall hinsichtlich der Materialstärke von bis zu ± 1 mm.

Im Fall der Anwendung eines geschlossenen, mindestens zweiteiligen Formwerkzeugs zur Durchführung des RTM-Verfahrens (so genanntes "Resin Transfer Molding"- Verfahren bzw. Harzinjektionsverfahren) ergeben sich im Gegensatz hierzu signifikant kleinere Toleranzintervalle.

Bei diesem RTM-Verfahren wird ein Verstärkungsfaservorformling mit einer geeigneten Geometrie, gegebenenfalls unter Beigabe von weiteren Verstärkungshalbzeugen, in ein vorzugsweise metallisches Formwerkzeug eingelegt und anschließend mit einem Kunststoffmaterial, beispielsweise einem aushärtbaren Epoxidharz imprägniert. Durch das Anlegen eines Vakuums wird der Harzinjektionsprozess beschleunigt und eine Blasenbildung in der Harzmatrix vermieden. Erforderlichenfalls kann das Harz zusätzlich unter Druck in die Form gegeben werden. Nach dem vollständigen Aushärten des Faserverbundbauteils durch die Anwendung von Druck und/oder Temperatur kann das fertige Faserverbundbauteil aus dem Formwerkzeug entnommen werden. Durch das in der Regel mindestens zweiteilige metallische (Stahl-) Formwerkzeug wird die Außenkontur eines im RTM-Prozess bzw. im Harzinjektionsverfahren hergestellten Bauteils mit hoher Genauigkeit und sehr guter Reproduzierbarkeit festgelegt.

Im Fall von offenen Vorrichtungen bzw. Werkzeugen weist zwar die dem Werkzeug zugewandte Seite des Bauteils eine relativ exakte, dem Werkzeug entsprechende Oberflächengeometrie auf. Auf der hiervon abgewandten Seite ergeben sich jedoch auf Grund der vorstehend aufgezeigten Fehlereinflüsse erhebliche Geometrieabweichungen, das heißt insbesondere undefinierte Dickenschwankungen. Um diesem Problem zu begegnen, wird die dem Werkzeug zugewandte Seite des Faserverbundbauteils in der Regel als Montagefläche bzw. auch als Außenhautfläche bei der Montage der Gesamtkonstruktion eingesetzt.

Diese Lösungsmöglichkeit stößt jedoch an Grenzen, wenn auf beiden Seiten der Faserverbundbauteile eine geringe Fertigungstoleranz gefordert ist, was insbesondere bei der Montage von gebolzten Verbindungen zwischen mehreren Faserverbundbauteilen der Fall ist. Als ein Beispiel mag die Montage von CFK-Spanten in einer mit einer CFK-Außenhaut versehenen Rumpfzelle dienen. Wenn zur Fertigung der CFK-Außenhaut beispielsweise ein Hohlzylinder dient, auf dessen Innenfläche das Verbundbauteil abgelegt bzw. aufgebaut wird, verfügt die Außenhaut in der Regel über eine ausreichend glatte Oberflächengeometrie, die der Innenfläche des als Form eingesetzten Hohlzylinders entspricht und eine hohe Maßgenauigkeit aufweist. Im Bereich der Innenseite der CFK-Außenhaut, die zumindest bereichsweise die Montagefläche für die einzubauenden CFK-Spante darstellt, ergeben sich jedoch die fertigungsbedingt unvermeidlichen Höhenschwankungen. Beim Einbau von CFK-Ringspanten in eine derartige CFK-Rumpfzelle können sich Toleranzabweichungen im Bereich von ± 1 mm zwischen der Innenfläche der CFK-Außenhaut und der Außenfläche des in der Regel mit hoher Maßgenauigkeit im RTM-Prozess hergestellten CFK-Ringspants ergeben. Aus diesen Maßabweichungen resultiert ein Montagespalt, der zur Sicherstellung einer mechanisch hinreichend belastbaren Verbindung mit einer festen oder flüssigen, aushärtbaren Zulage ("shim") aufgefüllt wird. Teilweise wird der Fertigungsprozess der CFK-Ringspanten und/oder der CFK-Rumpfhaut so kontrolliert, dass sich eine konstruktive Mindestspaltbreite ergibt, um ein Übermaß in jedem Fall zu vermeiden.

Durch den Einbau der Zulagen ergibt sich zum einen ein Mehrgewicht und zum anderen bewirken die Zulagen in gebolzten Verbindungen eine verringerte Ermüdungsfestigkeit. Ferner erhöht der Einbau der Zulagen den Montageaufwand erheblich, da der Spalt ausgemessen und die beispielsweise pastöse Zulage örtlich in einer exakt definierten Schichtdicke aufgetragen und ausgehärtet werden muss. Abschließend wird das zu befestigende Bauteil endgültig montiert. Darüber hinaus gibt es Bereiche in der Rumpfzellenstruktur, in denen die Anwendung von gebolzten Verbindungen mit Zulagen nicht zulässig ist.

Alternativ ist es beispielsweise möglich, das zu montierende Bauteil im Bereich der Montagefläche nachträglich zu bearbeiten, um eine hinreichende Passgenauigkeit zu erreichen. Dies kann jedoch zu einer strukturellen Schwächung bzw. einer unkontrollierbaren Änderung der strukturellen Eigenschaften infolge des Abtrags von Verstärkungsfaserlagen und/oder Matrixmaterial führen, auch wenn für diesen Materialschwund zusätzliche Lagen, sogenannte Opferlagen, vorgesehen sind.

Weiterhin ist es denkbar, ein zu befestigendes Bauteil im noch nicht ausgehärteten Zustand an die Einbauposition zu verbringen und erst dann das Bauteil auszuhärten. Der Nachteil dieser Vorgehensweise liegt jedoch in dem geringen erreichbaren Automatisierungsgrad und dem insgesamt hohen Prozessaufwand, da die Aushärtung im Montagezustand zum Beispiel innerhalb eines schwierig am Einbauort anzubringenden und abzudichtenden Vakuumsacks erfolgen muss.

Im Stand der Technik ist aus der DE 10 2006 041 653 A1 eine Verbundstruktur mit einem ersten Bauteil aus einem Faserverbundwerkstoff und einem weiteren Bauteil aus einem Faserverbundwerkstoff mit thermoplastischer Matrix sowie ein Verfahren zur Herstellung der Verbundstruktur bekannt, wobei das zweite Bauteil einen Tragebereich und einen quer zum Tragebereich orientierten Verbindungsbereich aufweist und über den Verbindungsbereich das zweite Bauteil an dem ersten Bauteil fixiert ist und zwischen dem Verbindungsbereich und dem ersten Bauteil eine Schicht aus kurzfaserverstärktem Material angeordnet ist.

Aus der DE 602 07 191 T2 ist das Herstellen von strukturellen Anordnungen mit dreidimensionalen gewebten, vorgeformten Anschlussstücken bekannt, wobei bei der Herstellung komplexe Strukturteile mit vorgeformten Strukturen gebildet werden. Kleber wird zwischen die vorgeformten Strukturen und noch nicht fixierten textilen Vorformen gebracht. Anschließend werden die vorgeformten Strukturen und die noch nicht fixierten, mit Harz getränkten dreidimensionalen gewebten Textilien gemeinsam mittels Wärme und/oder Druck fixiert, um größere komplexe Strukturen zu bilden.

Aus der EP 1 473 142 A1 ist ein Verfahren zum Ausgleich zu Fertigungstoleranzen bekannt. Bei diesem Verfahren werden zunächst die Abmessungen etwaig auftretender Fügespalte, die sich zwischen angrenzenden Flächen zweier Faserverbundbauteile ergeben können, abgetastet. Anschließend wird ein Füllgut auf die Flächen aufgebracht, um die ermittelten Fügespalte zu füllen.

Aufgabe der Erfindung ist es daher, ein vereinfachtes Verfahren zum Toleranzausgleich zwischen zwei zusammenzufügenden Faserverbundbauteilen zu schaffen.

Diese Aufgabe wird durch ein Verfahren nach Maßgabe des Patentanspruchs 1 mit den folgenden Schritten gelöst.
a) Herstellen des ersten Faserverbundbauteils, wobei eine Montagefläche Toleranzabweichungen aufweist,
b) Herstellen eines Werkzeugeinsatzes zum Einlegen in ein Formwerkzeug anhand einer Oberflächengeometrie der Montagefläche, wobei die Montagefläche (2) mittels einer Messeinrichtung (4) zur Ermittlung von Messdaten der Oberflächengeometrie der Montagefläche (2) abgetastet wird und anhand der Messdaten der Werkzeugeinsatz (7) hergestellt wird,
c) Einlegen des Werkzeugeinsatzes in ein Formwerkzeug und Herstellen des zweiten Faserverbundbauteils mit dem Werkzeugeinsatz in dem Formwerkzeug, wobei eine Oberflächengeometrie einer Kontaktfläche des zweiten Faserverbundbauteils im Wesentlichen mit der Oberflächengeometrie der Montagefläche korrespondiert, und
d) Zusammenfügen des ersten Faserverbundbauteils mit dem zweiten Faserverbundbauteil im Bereich von der Montagefläche und der Kontaktfläche.

In einem ersten Verfahrensschritt wird ein Faserverbundbauteil, bei dem es sich beispielsweise um ein Schalensegment einer CFK-Außenhaut einer Flugzeugrumpfzelle handeln kann, in konventioneller Weise gefertigt. Dies kann beispielsweise durch das innenseitige Ablegen von Prepreg-Material auf einer hohlzylindrischen "Female"-Form oder einem Segmentausschnitt hiervon erfolgen. Nach dem Aushärten der Epoxidharzmatrix erfolgt in einem Zwischenschritt die Abtastung, das heißt die messtechnische Erfassung einer für die Montage von beispielsweise einem CFK-Ringspant vorgesehenen Montagefläche.

In einem zweiten Verfahrensschritt wird auf der Grundlage der von der Messeinrichtung ermittelten Ist-Oberflächengeometriedaten der Montagefläche ein Werkzeugeinsatz hergestellt, der im Anschluss in ein bevorzugt mindestens zweiteiliges Formwerkzeug eingelegt wird, das zur Herstellung des zweiten Faserverbundbauteils dient. Bei dem zweiten Faserverbundbauteil kann es sich beispielsweise um einen CFK-Ringspant oder einen Segmentabschnitt hiervon handeln, der mit hoher Fertigungsgenauigkeit in dem mindestens zweiteiligen, geschlossenen Formwerkzeug bevorzugt im RTM-Prozess gefertigt wird. Die Herstellung des Werkzeugeinsatzes kann beispielsweise mit jeder denkbaren konventionellen Bearbeitungseinrichtung, beispielsweise einer CNC-gesteuerten Fräsmaschine, Funkenerosionsmaschine oder dergleichen erfolgen. Bevorzugt erfolgt die Herstellung des Werkzeugeinsatzes jedoch im so genannten "Rapid-Prototyping"-Verfahren, bei dem der Werkzeugeinsatz durch sukzessives, schichtweises Aufbauen und/oder Abtragen einer metallischen Legierung, einer keramischen Verbindung, einem Kunststoffmaterial oder einer beliebigen Kombination hiervon erfolgt. Im Ergebnis entspricht eine Seite des Werkzeugeinsatzes der exakten Ist-Oberflächengeometrie der Montagefläche.

Im dritten Verfahrensschritt erfolgt das Einlegen des Werkzeugeinsatzes in ein Formwerkzeug und die Herstellung des zweiten Bauteils in bekannter Weise vorzugsweise mittels eines RTM-Prozesses unter Verwendung des im zweiten Verfahrensschritt erstellten Werkzeugeinsatzes in dem Formwerkzeug. Hierdurch wird erreicht, dass eine Kontaktfläche des zweiten Bauteils mit der Montagefläche des ersten Bauteils im Idealfall vollständig korrespondiert (komplementär ist), wodurch im vierten Verfahrensschritt ein weitgehend spaltfreies Zusammenfügen der Montagefläche des ersten Bauteils mit der Kontaktfläche des zweiten Bauteils zum Beispiel mittels einer gebolzten Verbindung möglich ist.

Alternativ - insbesondere bei geringeren Genauigkeitsanforderungen - kann die Herstellung des zweiten Bauteils in einer einfachen offenen Form bzw. einem offenen Werkzeug erfolgen, so dass das RTM-Verfahren und die hierfür notwendigen mindestens zweiteiligen geschlossenen Formwerkzeuge keine Anwendung finden.

Durch die verfahrensgemäß gebildete nahezu spaltfreie Verbindung zwischen den beiden Bauteilen wird eine optimale mechanische Belastbarkeit der Fügestelle erzielt. Darüber hinaus lässt sich das Verfahren in hohem Maße automatisieren und ist demzufolge für industrialisierte Fertigungsprozesse gut geeignet.

Bei der Messeinrichtung handelt es sich vorzugsweise um ein berührungslos arbeitendes Laser-Messsystem, das die Ist-Oberflächengeometriedaten der für das zweite Bauteil vorgesehenen Montagefläche (xy-Ebene) mit hoher Auflösung, Genauigkeit und Geschwindigkeit über deren gesamte Flächenerstreckung feststellen kann. Im Ergebnis wird ein vollständiges Höhenprofil der Montagefläche ermittelt. Alternativ kann auch eine Vermessung mittels einer mechanischen Messeinrichtung erfolgen.

Die vom Laser-Messsystem ermittelten Messdaten werden vorzugsweise in Echtzeit in digitaler Form an die benachbarte Bearbeitungseinrichtung weitergeleitet, in der auf der Grundlage der übermittelten Messdaten der Ist-Oberflächengeometrie der Montagefläche die Herstellung eines Werkzeugeinsatzes für einen nachfolgenden RTM-Herstellungsprozess des zweiten zu montierenden Bauteils erfolgt.

Eine weitere vorteilhafte Fortbildung des Verfahrens sieht vor, dass die Herstellung des Werkzeugeinsatzes anhand der Messdaten in einer Modelliereinrichtung, insbesondere einer Rapid-Prototyping-Einrichtung, mittels einer metallischen Legierung, einer keramischen Verbindung, eines Kunststoffmaterials oder einer beliebigen Kombination hiervon erfolgt.

Der Einsatz des so genannten Rapid-Prototyping-Verfahrens ermöglicht die Herstellung des Werkzeugeinsatzes auf der Grundlage der von der Messeinrichtung ermittelten Messdaten der Ist-Oberflächengeometrie der Montagefläche innerhalb kürzester Zeit, das heißt im Regelfall in deutlich weniger als einer Stunde. Diesem Umstand kommt herausgehobene Bedeutung zu, da für jedes zu befestigende Bauteil jede Montagefläche erneut ausgemessen werden muss, um einen hierfür speziell angepassten Werkzeugeinsatz herstellen zu können. Handelt es sich bei den Bauteilen beispielsweise um CFK-Ringspantsegmente, die mit einer CFK-Rumpfzellenhaut verbunden werden sollen, so ist es erforderlich, jeden Ringspant für jeden Montageort individuell mittels des erfindungsgemäßen Verfahrens zu fertigen bzw. gleichzeitig durch die Verwendung eines individuellen Werkzeugeinsatzes für den RTM-Prozess anzupassen. Der Werkzeugeinsatz kann im Zuge des Rapid-Prototypen-Verfahrens mit einer beliebigen Metalllegierung, insbesondere einem Aluminiumlegierungsmaterial, einem hinreichend festen und temperaturbeständigen Kunststoffmaterial, einem Keramikmaterial, unter Umständen sogar mit einem Hartholz oder einer beliebigen Kombination hiervon gebildet werden. Der Materialwahl kommt keine herausgehobene Bedeutung zu, da jeder Werkzeugeinsatz nur einmalig verwendet werden kann und dieser daher über keine hohe Standzeit verfügen muss.

Aufgrund des zusätzlich in die für den RTM-Fertigungsprozess eingelegten Werkzeugeinsatzes kann es erforderlich sein, die für die Produktion des zweiten Bauteils standardmäßig vorgesehene Verstärkungsfaseranordnung bzw. den verwendeten Faservorformling geringfügig zu modifizieren, was beispielsweise durch zusätzlich eingebrachte Verstärkungsfasern und/oder Faserhalbzeuge erfolgen kann.

Ein Vorgehen ohne eine Anpassung der Faserverstärkungsanordnung ist auch denkbar. Bei der Herstellung des zweiten Bauteils in einem offenen Werkzeug ist genug Flexibilität vorhanden, so dass sich das zweite Bauteil in der Regel ohne Schwankungen im Faservolumengehalt an die gegebene Montagefläche anpassen kann. Ist das Werkzeug hingegen geschlossen (z.B. für die Durchführung eines RTM-Prozesses), so kann es eventuell erforderlich sein, ein oder mehrere flexible Elemente im Werkzeug vorzusehen, die für einen konstanten Faservolumengehalt auch bei einer variierenden Geometrie sorgen. Diese flexiblen bzw. elastischen Elemente können zum Beispiel mit der so genannten Aircast®-Modellier- bzw. Formmasse gebildet sein und beispielsweise eine streifenförmige, mehreckige oder runde, bevorzugt ebene Formgebung aufweisen. Alternativ können auch strangförmige Elemente mit eingebettet werden. Mit der Aircast®-Formmasse hergestellte Bauteile bzw. Elemente verfügen über ein Verformungsverhalten, das mit Elastomeren wie beispielsweise Gummi oder Silikon vergleichbar ist.

Eine weitere Ausgestaltung des Verfahrens sieht vor, dass die Herstellung des Werkzeugeinsatzes anhand eines mittels einer Abdruckmasse von der Montagefläche erstellten Abdrucks erfolgt.

Bei dieser Variante ist der Einsatz einer aufwendigen Messeinrichtung, insbesondere eines Laser-Messsystems, entbehrlich. Allerdings muss anhand des Abdrucks in einem weiteren Zwischenschritt zunächst ein Positiv-Abdruck der Oberflächengeometrie der Montagefläche hergestellt werden, der dann wiederum als Werkzeugeinsatz für das im nachfolgenden RTM-Prozess eingesetzte Formwerkzeug für die Herstellung bzw. die Anpassung des zweiten zu montierenden Bauteils dient. Als Formmasse kann grundsätzlich jedes schnell aushärtbare Material, das eine hinreichende Detailgenauigkeit des Abdrucks gewährleistet, verwendet werden.

Weitere vorteilhafte Ausgestaltungen des Verfahrens sind in der weiteren, nachfolgenden Figurenbeschreibung dargelegt.

In der Zeichnung zeigt:

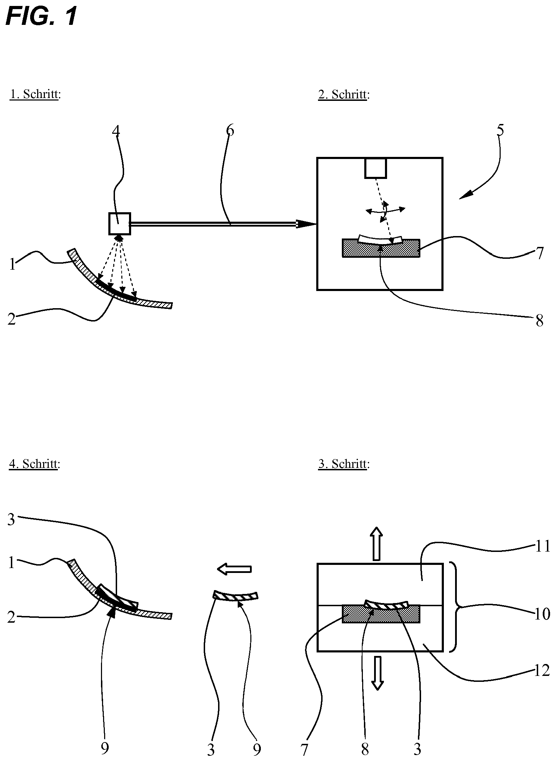

- Fig. 1: eine schematisierte Darstellung des Verfahrensablaufs.

Ein erstes Faserverbundbauteil 1, bei dem es sich im gezeigten Ausführungsbeispiel um eine Schale bzw. ein Segment einer CFK-Rumpfzellenhaut handelt, weist eine Montagefläche 2 zur Montage eines zweiten Bauteils 3 auf. Bei dem zweiten Faserverbundbauteil handelt es sich um ein in größerer Stückzahl im sogenannten RTM-Prozess mit hoher Maßgenauigkeit hergestelltes CFK-Ringspantsegment. Sowohl die CFK-Rumpfzellenhaut als auch das CFK-Ringspantsegment sind jeweils mit einer mit einem Epoxidharzsystem durchtränkten Kohlefaserverstärkungsfaseranordnung gebildet.

In einem ersten Verfahrensschritt wird zunächst eine Ist-Oberflächengeometrie der Montagefläche 2 mittels einer Messeinrichtung 4, bei der es sich vorzugsweise um ein berührungslos und mit hoher Geschwindigkeit arbeitendes Lasermesssystem handelt, abgetastet. Anstelle des berührungslos arbeitenden Lasermesssystems kann alternativ auch ein rein mechanisch wirkendes Abtastsystem eingesetzt werden. Die von der Messeinrichtung 4 ermittelten Messdaten der Ist-Oberflächengeometrie der Montagefläche 2 werden an eine herkömmliche Modelliereinrichtung 5, insbesondere eine so genannte "Rapid-Prototyping-Einrichtung" digital und in Echtzeit mittels der Datenleitung 6 übermittelt.

In der Modelliereinrichtung 5 wird im Zuge eines zweiten Verfahrensschrittes ein Werkzeugeinsatz 7 durch schichtweises bzw. sukzessives Abtragen und/oder Auftragen von Material auf der Grundlage der Messdaten der Ist-Oberflächengeometrie der Montagefläche 2 innerhalb von weniger als 1 Stunde aufgebaut. Hierbei weist eine Werkzeugeinsatzfläche 8 exakt dieselbe Oberflächengeometrie auf, wie die Montagefläche 2 des ersten Faserverbundbauteils. Die Werkzeugeinsatzfläche 8 korrespondiert weiterhin mit hoher Genauigkeit mit einer späteren Kontaktfläche 9 des im anschließenden RTM-Fertigungsprozess produzierten zweiten Faserverbundbauteils 3, bei dem es sich exemplarisch um den CFK-Ringspant handelt.

In einem dritten Verfahrensschritt wird der so erzeugte Werkzeugeinsatz 7 in ein im gezeigten Ausführungsbeispiel zweigeteiltes Formwerkzeug 10 mit einem Oberwerkzeug 11 und einem Unterwerkzeug 12 eingesetzt. Nach dem Einlegen eines Faservorformlings mit einer geeigneten geometrischen Gestalt für das zweite Faserverbundbauteil erfolgt in dem zweigeteilten Formwerkzeug 10 die Imprägnierung des Faservorformlings mit einem aushärtbaren Kunststoffmaterial, beispielsweise mit einem aushärtbaren Epoxidharz unter gleichzeitiger Anwendung von Druck und Temperatur vorzugsweise im RTM-Prozess. Nach der vollständigen Aushärtung kann das zweite Faserverbundbauteil 3 durch das Entfernen des Oberwerkzeugs 11 und des Unterwerkzeugs 12 in Richtung der entgegengesetzt ausgerichteten weißen Pfeile und das Ablösen vom Werkzeugeinsatz 7 entformt und entnommen werden. Aufgrund der vorstehend erläuterten Verfahrensweise verfügt die Kontaktfläche 9 des zweiten Faserverbundbauteils 3 über exakt dieselbe Oberflächengeometrie wie die Montagefläche 2 des ersten Faserverbundbauteils 1.

In einem vierten und letzten Verfahrensschritt erfolgt schließlich der Zusammenbau der beiden Faserverbundbauteile 1, 3 bzw. des CFK-Ringspantsegments mit dem Segment der CFK-Rumpfzellenhaut.

Das erfindungsgemäße Verfahren garantiert eine spaltfreie Verbindung der beiden Faserverbundbauteile 1, 3 im Bereich der Montagefläche 2 bzw. der Kontaktfläche 9, da zwischen beiden genannten Flächen im Idealfall ein nahezu vollständiger "Formschluss" besteht. Hierdurch wird zwischen den beiden Faserverbundbauteilen 1, 3 eine Bolzenverbindung mit außerordentlich hohen Festigkeitswerten bei einer gleichzeitig guten Ermüdungssicherheit möglich, die mit nicht derart passgenau aufeinander abgestimmten Kontakt- bzw. Montageflächen zwischen zwei zu verbindenden Faserverbundbauteilen ansonsten nicht erreichbar wäre. Unvermeidliche Fertigungstoleranzen des ersten Faserverbundbauteils im Bereich der Montagefläche 2 können mittels des erfindungsgemäßen Verfahrens vollständig kompensiert werden.

So ist es beispielsweise denkbar, das im beschriebenen Ausführungsbeispiel eine CFK-Rumpfzellenhaut (CFK-Hautschale) verkörpernde erste Faserverbundbauteil 1 auf einem so genannten "female"-Formwerkzeug durch lagenweises, innenseitiges Ablegen eines aushärtbaren Prepreg-Materials herzustellen, so dass zwar eine Außenfläche der schalenförmigen CFK-Rumpfzellenhaut aufgrund der definierten Anlage am Formwerkzeug eine hinreichend hohe und im industriellen Fertigungsprozess auch ausreichend reproduzierbare Maßgenauigkeit aufweist, die Innenfläche im Bereich der Montagefläche jedoch erheblichen, fertigungsbedingten Höhen- bzw. Dickenabweichungen von einer idealen Soll-Oberflächengeometrie (zum Beispiel einer geometrisch vollkommenen Zylindermantelinnenfläche) unterliegt, die jedoch mittels des erfindungsgemäßen Verfahrens fast vollständig ausgleichbar sind, so dass insbesondere optimale Bolzenverbindungen und/oder Nietverbindungen und/oder Klebeverbindungen zwischen beiden Faserverbundbauteilen 1, 3 ermöglicht werden. Somit lässt sich das zweite Faserverbundbauteil 3, das im Ausführungsbeispiel ein CFK-Ringspantsegment ist, in idealer Weise mit der CFK-Rumpfzellenhaut zusammenfügen.

Eine Fertigungseinrichtung zur Durchführung des erfindungsgemäßen Verfahrens verfügt zumindest über eine geeignete, insbesondere hinreichend präzise und schnelle, Messeinrichtung 4 sowie über eine Modelliereinrichtung 5 zur schnellen Generierung des Werkzeugeinsatzes 7. Darüber hinaus verfügt die Fertigungseinrichtung über eine Vorrichtung für den konventionellen RTM-Fertigungsprozess mit einem mindestens zweigeteilten Formwerkzeug 10 sowie eine nicht dargestellte, umfangreiche Steuer- und Regeleinrichtung zur Kontrolle des vorzugsweise vollautomatisch im industriellen Maßstab ablaufenden Verfahrens.

### Bezugszeichenliste

- 1: erstes Faserverbundbauteil
- 2: Montagefläche
- 3: zweites Faserverbundbauteil
- 4: Messeinrichtung
- 5: Modelliereinrichtung
- 6: Datenleitung
- 7: Werkzeugeinsatz
- 8: Werkzeugeinsatzfläche
- 9: Kontaktfläche (zweites Faserverbundbauteil)
- 10: Formwerkzeug (RTM-Prozess)
- 11: Oberwerkzeug
- 12: Unterwerkzeug

## Patentansprüche

1. Verfahren zum Toleranzausgleich zwischen zwei Faserverbundbauteilen (1, 3) für Luftfahrzeuge, umfassend die Schritte:
a) Herstellen des ersten Faserverbundbauteils (1), wobei eine Montagefläche (2) Toleranzabweichungen aufweisen kann,
b) Herstellen eines Werkzeugeinsatzes (7) zum Einlegen in ein Formwerkzeug anhand einer Oberflächengeometrie der Montagefläche (2), wobei die Montagefläche (2) mittels einer Messeinrichtung (4) zur Ermittlung von Messdaten der Oberflächengeometrie der Montagefläche (2) abgetastet wird und anhand der Messdaten der Werkzeugeinsatz (7) hergestellt wird,
c) Einlegen des Werkzeugeinsatzes in ein Formwerkzeug und Herstellen des zweiten Faserverbundbauteils (3) mit dem Werkzeugeinsatz (7) in dem Formwerkzeug (10), wobei eine Oberflächengeometrie einer Kontaktfläche (9) des zweiten Faserverbundbauteils (3) im Wesentlichen mit der Oberflächengeometrie der Montagefläche (2) korrespondiert, und
d) Zusammenfügen des ersten Faserverbundbauteils (1) mit dem zweiten Faserverbundbauteil (3) im Bereich von der Montagefläche (2) und der Kontaktfläche (9).

2. Verfahren nach Patentanspruch 1, wobei die Herstellung des Werkzeugeinsatzes (7) anhand der Messdaten in einer Modelliereinrichtung (5), insbesondere einer Rapid-Prototyping-Einrichtung, mittels einer metallischen Legierung, einer keramischen Verbindung, eines Kunststoffmaterials oder einer beliebigen Kombination hiervon erfolgt.

3. Verfahren nach Patentanspruch 1, wobei die Herstellung des Werkzeugeinsatzes (7) anhand eines mittels einer Abdruckmasse von der Montagefläche (2) erstellten Abdrucks erfolgt.

4. Verfahren nach einem der Patentansprüche 1 bis 3, wobei die Abtastung der Montagefläche (2) mechanisch oder berührungslos erfolgt.

5. Verfahren nach einem der Patentansprüche 1 bis 4, wobei das Formwerkzeug ein geschlossenes Formwerkzeug (10) ist.

6. Verfahren nach Patentanspruch 5, wobei zur Herstellung des zweiten Faserverbundbauteils (3) in das geschlossene Formwerkzeug (10) mindestens ein elastisches Element zum Aufrechthalten eines gleichbleibenden Faservolumenanteils eingelegt wird.

7. Verfahren nach einem der Patentansprüche 1 bis 6, wobei die Faserverbundbauteile (1, 3) mit einem faserverstärkten duroplastischen Kunststoffmaterial, insbesondere mit einem kohlefaserverstärkten Epoxidharz gebildet werden.

## Claims

1. Method for tolerance compensation between two fibre composite components (1, 3) for aircraft, comprising the following steps:
a) producing the first fibre composite component (1), wherein a mounting surface (2) can have tolerance deviations,
b) producing a mould insert (7) for insertion into a mould on the basis of a surface geometry of the mounting surface (2), wherein the mounting surface (2) is scanned by means of a measuring device (4) to determine measurement data of the surface geometry of the mounting surface (2) and the mould insert (7) is produced on the basis of the measurement data,
c) inserting the mould insert into a mould and producing the second fibre composite component (3) with the mould insert (7) in the mould (10), wherein a surface geometry of a contact surface (9) of the second fibre composite component (3) substantially corresponds to the surface geometry of the mounting surface (2), and
d) joining together the first fibre composite component (1) with the second fibre composite component (3) in the region of the mounting surface (2) and the contact surface (9).

2. Method according to claim 1, wherein the mould insert (7) is produced on the basis of the measurement data in a modelling device (5), in particular a rapid prototyping device, by means of a metal alloy, a ceramic compound, a plastics material or any combination thereof.

3. Method according to claim 1, wherein the mould insert (7) is produced on the basis of a cast created from the mounting surface (2) by means of a cast compound.

4. Method according to any of claims 1 to 3, wherein the mounting surface (2) is scanned mechanically or contactlessly.

5. Method according to any of claims 1 to 4, wherein the mould is a closed mould (10).

6. Method according to claim 5, wherein, in order to produce the second fibre composite component (3), at least one elastic element for maintaining a constant fibre volume portion is placed into the closed mould (10) .

7. Method according to any of claims 1 to 6, wherein the fibre composite components (1, 3) are formed with a fibre reinforced thermosetting plastics material, in particular with a carbon fibre reinforced epoxy resin.

## Revendications

1. Procédé de compensation de tolérances entre deux éléments en matériau composite renforcé par des fibres (1, 3) pour des avions, comprenant les étapes suivantes:
a) fabriquer un premier élément en matériau composite renforcé par des fibres (1), dans lequel une face de montage (2) peut présenter des écarts de tolérance,
b) fabriquer un insert d'outil (7) à poser dans un outil de moulage à l'aide d'une géométrie de surface de la face de montage (2), dans lequel on balaie la face de montage (2) au moyen d'un dispositif de mesure (4) pour la détermination de données de mesure de la géométrie de surface de la face de montage (2) et on fabrique l'insert d'outil (7) à l'aide des données de mesure,
c) poser l'insert d'outil dans un outil de moulage et fabriquer le deuxième élément en matériau composite renforcé par des fibres (3) avec l'insert d'outil (7) dans l'outil de moulage (10), dans lequel une géométrie de surface d'une face de contact (9) du deuxième élément en matériau composite renforcé par des fibres (3) correspond essentiellement à la géométrie de surface de la face de montage (2), et
d) assembler le premier élément en matériau composite renforcé par des fibres (1) au deuxième élément en matériau composite renforcé par des fibres (3) dans la région de la face de montage (2) et de la face de contact (9).

2. Procédé selon la revendication 1, dans lequel on effectue la fabrication de l'insert d'outil (7) à l'aide des données de mesure dans un dispositif de modélisation (5), en particulier un dispositif de prototypage rapide, au moyen d'un alliage métallique, d'un composé céramique, d'un matériau à base de matière plastique ou d'une combinaison quelconque de ceux-ci.

3. Procédé selon la revendication 1, dans lequel on effectue la fabrication de l'insert d'outil (7) à l'aide d'une empreinte produite par la face de montage (2) au moyen d'une masse d'empreinte.

4. Procédé selon l'une quelconque des revendications 1 à 3, dans lequel on effectue le balayage de la face de montage (2) de façon mécanique ou sans contact.

5. Procédé selon l'une quelconque des revendications 1 à 4, dans lequel l'outil de moulage est un outil de moulage fermé (10).

6. Procédé selon la revendication 5, dans lequel pour la fabrication du deuxième élément en matériau composite renforcé par des fibres (3) on pose dans l'outil de moulage fermé (10) au moins un élément élastique destiné à maintenir une proportion volumique de fibres constante.

7. Procédé selon l'une quelconque des revendications 1 à 6, dans lequel on forme les éléments en matériau composite renforcé par des fibres (1, 3) avec un matériau à base de matière plastique thermodurcissable renforcé par des fibres, en particulier avec une résine époxy renforcée par des fibres de carbone.
